# EUROPEAN PATENT APPLICATION

(11) **EP 1 724 722 A1**
(43) Date of publication of application: **22.11.2006**
(21) Application number: 05010776.2
(22) Date of filing: 18.05.2005
(51) Int. Cl.: G06Q 40/00

(54) **Automatic intermediary order execution system**

(71) Applicant: DEUTSCHE BÖRSE AG, 60485 Frankfurt am Main (DE)
(72) Inventor: Budimir, Miroslav, Dr., 60485 Frankfurt am Main (DE); Gomber, Peter, Dr., 60485 Frankfurt am Main (DE)
(74) Representative: Grünecker, Kinkeldey, Stockmair & Schwanhäusser Anwaltssozietät

(57) **Abstract**

Computer systems operated in a Specialist's security trading system providing a Specialist's market apart from a reference market and corresponding methods and computer program products are provided. A received order may automatically be executed with its full size if, at least, the size of the order does not exceed a predefined guarantee size. If the guarantee size is exceeded, an auction may be invoked. Further the received order and a sitting order in the specialist's order book may, under certain preconditions, both be automatically executed at the volume-weighted average price calculated for the size of the received order based on the current reference order book situation plus a price improvement. The proposed trading facility addresses the requirements of retail investors while ensuring high price efficiency, lowest trading costs and immediate execution.

## Description

### BACKGROUND OF THE INVENTION

### 1. Field of the Invention

The present invention relates to computer systems and corresponding methods and computer program products for processing orders in a security trading system and in particular to automatic, intermediary (specialist) based order processing techniques.

### 2. Description of the Related Art

Besides exchange floor trading, electronic trading systems have become important places where securities are bought and sold. A known trading platform for processing electronic orders is Xetra (Exchange Electronic Trading) which is a distributed system whose components are connected according to the client-server principle. Some of the Xetra functionality is decentralized on the participant's installations, so called front-ends, and some of it is implemented centrally on the Xetra back-end of the exchange. The participant's front-end installation can also be set up based on the client-server principle and the use of a programmable interface makes the front-end an open system to which any number of participant's applications can be connected or added on.

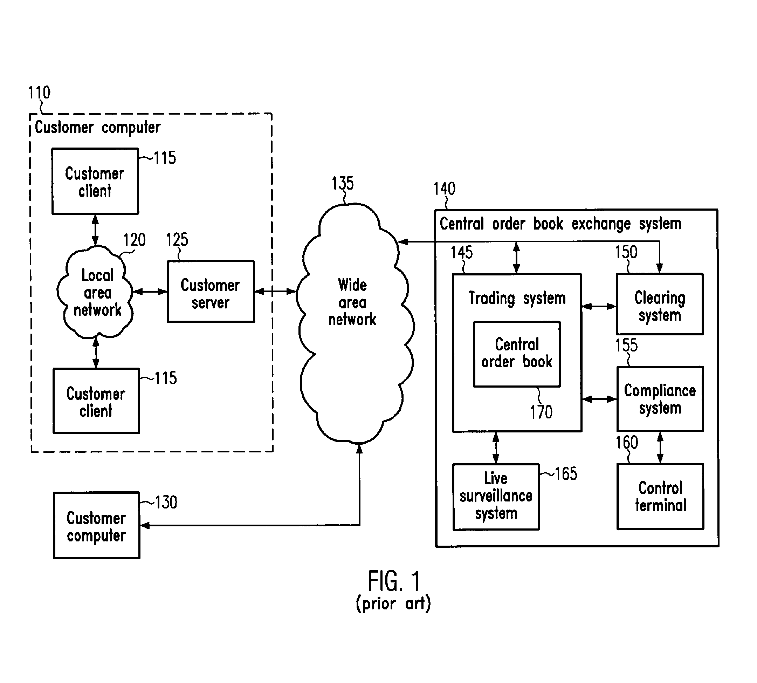

A typical trading platform is shown in Figure 1. Customer computers 110, 130, the front-ends, are connected to the central order book exchange system 140 representing the back-end of the trading platform through a WAN (Wide Area Network) 135 which spans a large geographic area. The internet is an example of WAN 135. The customer computers can be stand-alone systems, for instance the customer computer 130, or have a distributed system architecture as for customer computer 110. Distributed customer computers 110 usually include a number of customer clients 115 connected to a customer server 125 through a LAN (Local Area Network) 120 that is confined to a building or a group of buildings, e.g., the branches of a bank. The customer server 125 is coupled to the LAN 135 for communicating with the back-end 140.

The central order book exchange system 140 comprises a trading system 145. The trading system 145 authenticates the remote customer computers 110 and 130 and stores the orders received therefrom over the WAN 135 in a central order book 170. It then matches the orders, executes suiting ones and clears the trades consecutively. The trading system 145 also reports the last trade as well as all orders as they are received and notifies the traders at the remote terminals 110 and 115 of filled or unfilled orders. It can access its memory to report various market conditions and transactions and maintains a detailed trade history for each trade member. Finally, it provides the necessary trade data for settlement and compliance with the rules of the exchange.

Further, the central order book exchange system 140 may include a clearing system 150 connected to the trading system 145 and the customer computers 110 and 130 via the WAN 135 for clearing all trades based upon the exchange rules. A compliance system 155 within the central order book exchange system 140 communicates with the trading system for tracking and reporting the trading activities of each trade member, as well as detecting trade irregularities. It provides information to a control terminal 160 to answer enquiries from exchange officers who ensure that the system rules are being complied with. A live surveillance system 165 is coupled to the trading system 145 to enable the exchange officers to review all information relating to trading.

With Xetra, all market participants have equal access to the trading platform, regardless of their geographic location. Unlike exchange floor trading, electronic order processing makes it possible for orders to be entered in the system and automatically matched. Further, trading in equities and warrants is possible on a single trading platform. It is further possible to individualize transaction requests with regard to validity and way of execution. Selection between limit and market orders takes into consideration the different demands of the market participants as to the speed of order execution.

One basis of this trading worldwide, no matter whether trading takes place on a regulated exchange or other market places, is order book trading. In order book trading, orders placed by investors in a given security form an order book like the central order book 170 and are executed according to well-defined principles, usually a price/time priority i.e., according to the limit of the order and the time the order has been entered into the trading system. The order with the highest priority will be the first to be executed if an execution becomes possible. Executions are possible if the limits of the order with the highest priority on the buy side of the order book is higher than or equal to the order limit with the highest priority on the sell side of the order book. The execution or matching of orders also follows well defined principles where the prevailing trading form also influences the exact procedure such as continuous trading and auction trading.

Contemporary securities trading for professional investors is mostly conducted via electronic order book trading and is thus seen as efficient and cost effective. Particularly this form of security trading offers several advantages to professional investors like fast order processing and the ability to choose between immediate order execution and the possibility of price improvement. However, retail investors often face disadvantages when they utilize the same execution venues as professional (wholesale) investors.

For instance, retail investors might be distracted from using the continuous order book trading platforms like e.g., Xetra. The reasons for this might be manifold as they reach from restrictions in the minimum order size, that is allowed for continuous trading, i.e., large round lot size or due to concerns regarding the system performance that can be adversely affected when - frequently arriving - small retail orders are allowed.

Further, retail investors might face larger explicit trading fees when participating on wholesale platforms than when trading on retail platforms. A reason for this might be a disproportional shifting of trading fees by intermediaries to their retail customers, especially when orders are executed in several chunks throughout the trading day(s) or at several limits within an instantaneous execution - so called "partial fills". Often, retail brokers charge every partial fill separately, each time applying the full minimum fee rate per execution.

Moreover, when retail and wholesale flow is pooled into one market, retail investors face adverse selection cost. This applies as insiders or "informed" traders - defined as traders having better knowledge about the security's future prospects than the rest of the market - trade with "uninformed" traders. In such a setting, insiders systematically achieve trading gains at the expense of uninformed investors. As retail investors are more likely to be considered uninformed, they pay an adverse selection premium when trading on a wholesale platform.

### SUMMARY OF THE INVENTION

Therefore, it is the object of the present invention to provide to retail customers a trading facility that offers the advantages of a professional platform without the corresponding unfavourable effects.

This object is solved by the invention as defined in the independent claims. Embodiments are specified in the dependent claims.

In one embodiment, a computer system operated in a specialist's security trading system is provided. The specialist's security trading system provides a specialist's market apart from a reference market provided by a reference security trading system. The computer system is adapted to process orders and comprises a receiving unit adapted to receive an order, a size checking unit, and an order processing unit. The size checking unit is adapted to determine whether the size of the order exceeds a predetermined guarantee size. The order processing unit is adapted to automatically execute the order with its full size if, at least, the size of the order does not exceed the guarantee size, and to invoke an auction in the specialist's security trading system if the size of the order exceeds the guarantee size.

In another embodiment, a method of operating a computer system in a specialist's security trading system is provided. The specialist's security trading system provides a specialist's market apart from a reference market provided by a reference security trading system. An order is received. It is determined whether the size of the order exceeds a predetermined guarantee size. If, at least, the size of the order does not exceed the guarantee size, the order is automatically executed with its full size. An auction is invoked in the specialist's order book exchange system if the size of the order exceeds the guarantee size.

A computer program product for operating a computer system in a specialist's security trading system is provided according to a further embodiment. The specialist's security trading system provides a specialist's market apart from a reference market provided by a reference security trading system. The computer program product comprises first computer program means for receiving an order and second computer program means for determining whether the size of the order exceeds a predetermined guarantee size. Third computer program means comprised by the computer program product are for automatically executing the order with its full size if, at least, the size of the order does not exceed a predetermined guarantee size. Further, the computer program product comprises forth computer program means for invoking an auction in the specialist's security trading system if the size of the order exceeds the guarantee size.

In yet another embodiment, a computer system operated in a specialist's security trading system is provided. The specialist's security trading system provides a specialist's market apart from a reference market provided by a reference security trading system. The computer system comprises a specialist's order book adapted to store a first order. Further, the computer system comprises a receiving unit, a reference market observation unit, an execution price setting unit, and an order processing unit. The receiving unit is adapted to receive a second order, wherein the second order is a sell or buy order if the stored first order is a buy or sell order, respectively. The reference market observation unit is adapted to receive information indicating a current situation in a reference order book in the reference security trading system. The execution price setting unit is adapted to setting an execution price for the received second order by calculating a volume-weighted average price for the size of the received second order based on the current situation in the reference order book and adding a price improvement to the volume-weighted average price. The order processing unit is adapted to automatically execute both the stored first order and the received second order at the execution price if one or more preconditions are fulfilled.

A method of operating a computer system in a specialist's security trading system is provided according to a further embodiment. The specialist's security trading system provides a specialist's market apart from a reference market provided by a reference security trading system. A first order is stored in a specialist's order book in the specialist's trading system. A second order is received, wherein the second order is a sell or buy order if the stored first order is a buy or sell order, respectively. Further, information indicating a current situation in a reference order book in the reference security trading system is received. An execution price for the received second order is set by calculating a volume-weighted average price for the size of the received second order based on the current situation in the reference order book and adding a price improvement to the volume-weighted average price. Both the stored first order and the received second order are automatically executed at the execution price if one or more preconditions are fulfilled.

According to another embodiment, a computer program product for operating a computer system in a specialist's security trading system is provided. The specialist's security trading system provides a specialist's market apart from a reference market provided by a reference security trading system. The computer program product comprises first computer program means for storing a first order in a specialist's order book in the specialist's security trading system. Further, the computer program product comprises second, third, forth and fifth computer program means. The second computer program means is for receiving a second order, wherein the second order is a sell or buy order if the stored first order is a buy or sell order, respectively. The third computer program means is for receiving information indicating a current situation in a reference order book in the reference security trading system. The forth computer program means is for setting an execution price for the received second order by calculating a volume-weighted average price for the size of the received second order based on the current situation in the reference order book and adding a price improvement to the volume-weighted average price. The fifth computer program means is for automatically executing both the stored first order and the received second order at the execution price if one or more preconditions are fulfilled.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating an order processing computer system according to prior art;
FIG. 2 is a block diagram illustrating an order processing computer system according to an embodiment;
FIG. 3 is a flow diagram illustrating order processing according to an embodiment;
FIG. 4 is a flow diagram illustrating the standard processing step of FIG. 3 according to an embodiment;
FIG. 5 is a flow diagram illustrating the standby processing step of FIG. 3 according to an embodiment;
FIG. 6 is a flow diagram illustrating the small order processing step of FIGs. 4 and 5 according to an embodiment;
FIG. 7 is a flow diagram illustrating the large order processing step of FIGs. 4 and 5 according to an embodiment;
FIG. 8 is a flow diagram illustrating the clean-up processing step of FIG. 7 according to an embodiment;
FIG. 9 is a flow diagram illustrating the change-induced processing step of FIG. 3 according to an embodiment;
FIG. 10 is a flow diagram illustrating the stop order checking step of FIIG. 3 according to an embodiment;
FIG. 11 illustrates an example of an order book situation according to an embodiment;
FIG. 12 illustrates another example of an order book situation according to an embodiment;
FIG. 13 illustrates a further example of an order book situation according to an embodiment;
FIG. 14 illustrates yet another example of an order book situation according to an embodiment;
FIG. 15 illustrates another example of an order book situation according to an embodiment;
FIG. 16 illustrates a further example of an order book situation according to an embodiment;
FIG. 17 illustrates yet a further example of an order book situation according to an embodiment;
FIG. 18 illustrates another example of an order book situation according to an embodiment; and
FIG. 19 illustrates an example of the interaction of trading phases and the system of the invention.

### DETAILED DESCRIPTION OF THE INVENTION

The illustrative embodiments of the invention will be described with reference to the figure drawings wherein like elements and structures are indicated by like reference numbers.

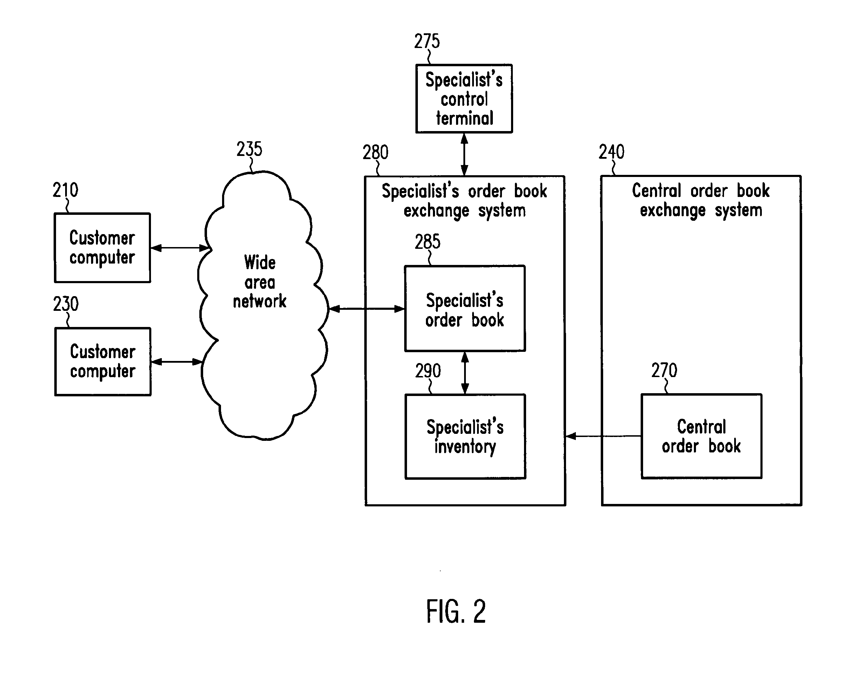

Referring now to the Figure drawings and in particular to Figure 2, a computer system for processing orders in a security trading system according to an embodiment is illustrated. The depicted "Specialist Auto-Ex" trading facility may focus on the needs of retail investors. It may allow for immediate and automatic execution ("Auto-Ex") of marketable orders against an intermediary (Specialist) at a reference price whereas the Specialist may provide a price improvement. Under certain conditions, the automatic execution may be suspended. The facility may guarantee that orders up to a predefined "guarantee size" are not partially filled.

The depicted computer system comprises a central order book exchange system 240 which may include substantially the same components as the central order book exchange system 140 discussed above with respect to Figure 1. This means that the central order book 270 may correspond to the central order book 170 of Figure 1. Further, in the same way as the central order book exchange system 140, the central order book exchange system 240 may be connected to a number of customer computers (not shown) through a WAN or any other type of computer network.

However, in the embodiment depicted in Figure 2, an intermediary instance, the Specialist's order book exchange system 280, is provided between the central order book exchange system 240 and a number of customer computers 210, 230. In this way, the illustrated trading system may combine electronic order book trading with the human expertise of a "Specialist". Nonetheless, the depicted Specialist Auto-Ex facility may still be considered to be a regulated market. During trading in the Specialist Auto-Ex market, the central order book may generally be available, as usual. The Specialist Auto-Ex market, however, may represent a self-contained market that may also exist alone, independently of the central order book market. For instance, trading in the Specialist Auto-Ex market may take place during evening trading hours when the central order book is not available, as will be explained in more detail below. It is noted that in other embodiments, more than one Specialist Auto-Ex system 280 may be assigned to the central order book exchange system 240.

Customer orders may be entered into the Specialist's order book exchange system 280 by customer computers 210, 230 connected thereto through the WAN 235, e.g., the internet or any other suitable network type. The customer computers 210, 230 may correspond to the customer computers 110, 130 discussed above in the context of Figure 1. The customer orders may automatically (in contrast to "manually") be executed by the Specialist's order book exchange system 280 at a price that is currently available at the reference market or better. The reference market may be provided by the central order book exchange system 240. Thus, the Specialist's order book exchange system 280 may be connected to the central order book exchange system 240 for price import purposes. Further, information on the current order book situation of the central order book 270 may be provided to the Specialist's order book exchange system 280. To get all the required information from the central order book exchange system 240, the Specialist's order book exchange system 280 may e.g., send requests to the central order book exchange system 240 or permanently monitor it. The corresponding information transfer may be accomplished through any type of computer interconnection, e.g., a LAN or WAN.

Upon reception of a customer order, the Specialist's order book exchange system 280 may immediately check whether the order is with its full size (volume) executable against the "VWA+PI" price. The VWA+PI price may be the Volume-Weighted Average (VWA) price for the size of the incoming order that is currently available on the reference market (i.e., the central order book exchange system 240) plus a Price Improvement (PI) which may be prespecified by the Specialist. If certain conditions are met, the order may be automatically executed against the Specialist's inventory with its full size. Otherwise, the order may be stored in the Specialist's order book 285 and queued according to price/time priority rules.

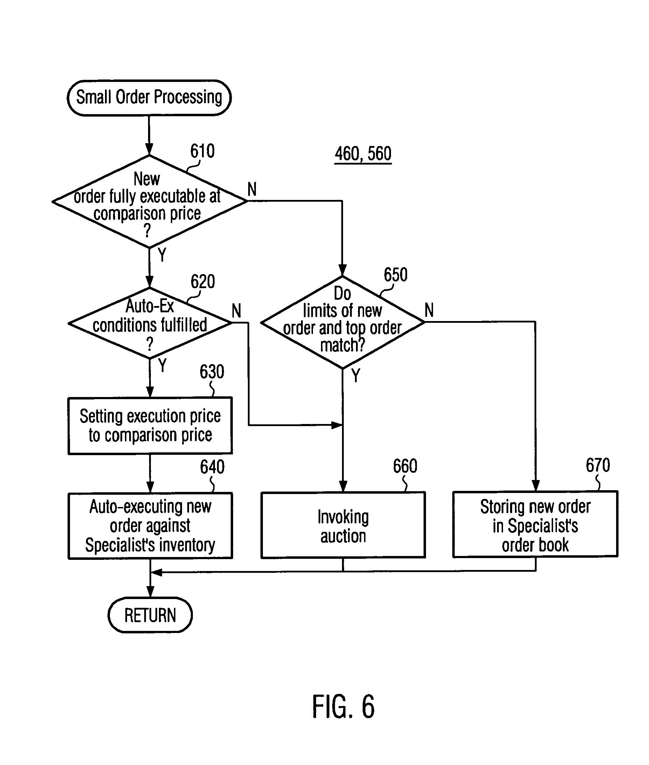

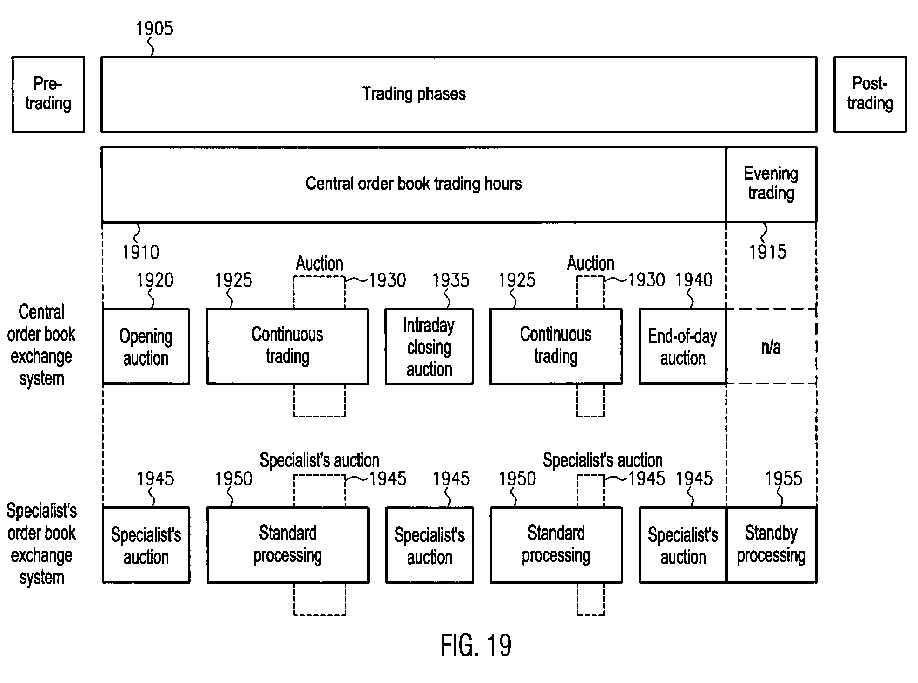

The Specialist may enter both quotes and orders into the Specialist's order book exchange system 280, either manually or via an electronic interface. Orders may be entered by the Specialist on own behalf or on behalf of Specialist Auto-Ex market participants. If the order is on behalf of a Specialist Auto-Ex market participant, the Specialist may additionally specify the participant's identifier for clearing and settlement purposes. Specialist's orders may be entered during Auto-Ex, Call and Freeze phases and may be treated as any other order. These trading phases will be discussed in more detail below, e.g., with respect to Figures 6 and 19. If the Specialist enters a marketable order during an Auto-Ex phase, i.e., as long as no auction is held in the Specialist's order book exchange system 280 the order may - depending on its size - either automatically be executed if its size is below or equal to the guarantee size (and if other Auto-Ex conditions apply, as discussed in more detail below), or the Freeze phase of an auction may be invoked if the order size exceeds the guarantee size.

As will be explained in detail with regard to Figure 19, the order book may assume one of a plurality of trading states, including continuous trading, auction, and evening trading. During evening trading and during auctions, the Specialist may be obliged to provide quotes. A maximum spread regime may apply. The Specialist may have to quote for at least the minimum guarantee size. When providing quotes, the provision of explicit price improvement - based on quote parameters - may not be possible. Each Specialist may be able to provide one quote per instrument. Quotes may be entered during the pre-trading phase, the main trading phase, and the post-trading phase. Quotes may be modified at any time during the trading day (except in Freeze phases). Also during Call phases of auctions, quotes may be entered. During Freeze phases, quotes may not be entered, modified or deleted, except if the Specialist enters orders on behalf of Specialist Auto-Ex market participants and no orders in the order book are affected by the subsequent execution. During auctions on the central order book exchange system 240, quotes may be valid at least for the guarantee size, unless the total size available on the central order book 270 is smaller than the guarantee size. In this case, the quote may be valid for the size available on the central order book 270.

If the reference market provided by the central order book exchange system 240 is not available, e.g., during evening trading hours or if trading on the central order book exchange system 240 is halted, the Specialist may provide quotes. Then, incoming customer orders may be automatically executed against the Specialist's quotes (i.e., the VWA+PI price is not relevant during evening trading hours) if they are executable with their full size and if certain further conditions are met.

The Specialist may guarantee that orders with a size up to the predefined guarantee size are not partially filled. Furthermore, the Specialist may always act as counterpart when executing orders up to the guarantee size. This principle may also apply if an incoming order would hit a limit order on the contra side of the Specialist's order book 285. In this case, the Specialist may act as counter party for both orders.

The Specialist's order book exchange system 280 of the present embodiment may provide a market apart from the reference market provided by the central order book exchange system 240, i.e., a fundamentally separate market that is not directly connected to the central order book 270. This may imply that orders are never forwarded to the central order book 270. Any order entered into the Specialist's order book exchange system 280 may either be immediately and automatically executed or entered into the Specialist's order book 285.

In the Specialist Auto-Ex market, the principle of the closed order book may apply. This may imply that the orders stored in the Specialist's order book 285 may in principle not be displayed to the market (thus, there may be no pre-trade transparency for limit orders). The Specialist may be the only market participant will full insight into the Specialist's order book 285. To other market participants, the BBO (Best Bid Offer) in the central order book 270 as well as the VWA+PI price may be displayed during continuous trading on the central order book exchange system 240. During evening trading and during auctions the Specialist's quote may be displayed. These quotes may reflect orders having a size above a significant size. Therefore, despite the Specialist's order book 285 being substantially closed, a customer order in the Specialist's order book 285 may be set for public display by the Specialist if the order exceeds the significant size, and if the order is limited better than the Specialist's quote, and if the order is limited better than the current BBO on the central order book 270.

Under certain conditions, the automatic order execution may be suspended and a Call auction may be invoked. These conditions may apply, e.g., if continuous trading on the reference market is suspended by a Call auction (i.e., the opening auction, closing auction, intraday auction and auctions due to volatility interruptions on the central order book exchange system 240). Further, the automatic execution may be suspended when a marketable order arrives at the Specialist's order book exchange system 280 that exceeds the guarantee size, or if a partial fill is due, or if the Specialist invokes a Call auction (either manually or automatically according to rules predefined by the Specialist), or if the next potential execution price on the Specialist's order book exchange system 280 lies outside the dynamic price range of the central order book exchange system 240. Further conditions may exist under which automatic execution in the Specialist's order book exchange system 280 may be suspended. During Call auctions in the Specialist's order book exchange system 280 price determination may be accomplished following the Modified Principle of Most Executable Volume (MPoMEV), whereas the Specialist may provide human expertise. According to the present embodiment, the MPoMEV corresponds to the Principle of Most Executable Volume (PoMEV), whereas the next price must be within the Specialist's quote.

According to the present embodiment, one single market maker (the Specialist) per instrument exists. In order to allow the Specialist, e.g., to enter orders and/or quotes, observe the trading process on the Specialist's order book exchange system 280 or suspend the automatic order execution by invoking an auction at his discretion, a Specialist's control terminal 275 may be provided. The Specialist's control terminal 275 may be connected to the Specialist's order book exchange system 280 or may alternatively be integrated therein. The Specialist may interact with the Specialist's control terminal 275 directly or via an electronic interface e.g., from a remote computer via a LAN or WAN. Through the Specialist's control terminal 275, the Specialist may further be allowed to increase the guarantee size or reduce it, but must not be below a minimum guarantee size.

A performance measurement of the Specialist's service may be implemented in order to perform quality assessment of the Specialist, especially with regard to his behaviour during auctions. Also, the performance measurement may be implemented by the Specialist's order book exchange system 280 or by an external system (not shown).

The Specialist's order book exchange system 280 may be a stand-alone computer system or have a distributed system architecture, e.g., according to the client-server principle. It is noted that particularly the storage of the Specialist's inventory 290 may be accomplished externally to the Specialist's trading system: the securities may be physically held by the central security's depository or in the accounts of the depository bank, while the Specialist may only keep account of his trading inventory.

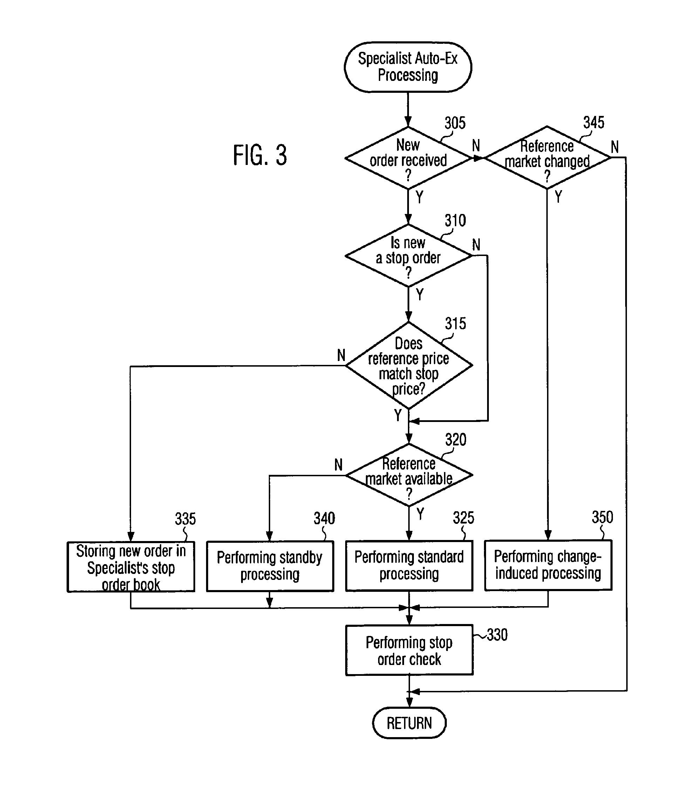

The above outlined functionality of the Specialist Auto-Ex trading facility according to an embodiment will now be described in more detail with reference to Figures 3 to 10.

Figure 3 gives a general overview of the Specialist Auto-Ex processing according to an embodiment. The processing may be performed by the Specialist's order book exchange system 280 of Figure 2.

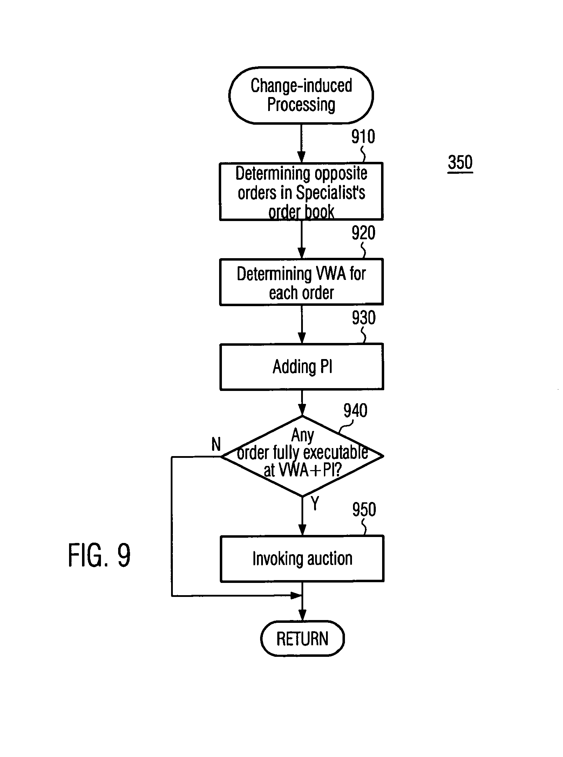

In step 305, it may be determined whether a new order is received by the Specialist's order book exchange system 280. If this is not the case, it may then be queried in step 345 whether the situation on the reference market, i.e., on the central order book 270 has changed. If this is not the case either, the Specialist Auto-Ex processing may be complete at this point and restart at step 305. If step 345 yields that the reference market situation has changed, the change-induced processing may be performed in step 350, which will described in more detail below, with reference to Figure 9.

If it has been determined in step 305 that a new order has been received, it is identified in step 310 whether the new order is a stop order. Stop orders may be used to support trading strategies since their execution may be possible after the reference price reaches a predefined level, i.e., the stop price. For stop orders, the transaction price on the central order book 270 as well as the Specialist Auto-Ex transaction price may be used. Stops may never be triggered by any best bid or offer prices, nor by the Specialist's VWA+PI price, nor by quotes. Both stop market orders and stop limit orders may be used. When the stop price is reached (or exceeded for stop buy orders or fallen below for stop sell orders) a stop market order may automatically be placed in the Specialist's order book 285 as a market order. Accordingly, when the stop price is reached (or exceeded for stop buy orders or fallen below for stop sell orders) a stop limit order may automatically be placed in the Specialist's order book 285 as a limit order.

Thus, in addition to the Special's order book 285, the Specialist's order book exchange system 280 may comprise a Specialist's stop order book (not shown in Figure 2), for storing incoming stop orders until they are converted into corresponding market or limit orders and transferred to the Specialist's order book 285. The Specialist's stop order book may be implemented as part of the Specialist's order book 285 or separately therefrom. Each modification of a stop order may lead to an appointment of a new time stamp.

Market and limit orders may represent the two basic order types admitted in the Specialist Auto-Ex market of the present embodiment. Market orders may be unlimited bid/ask orders that are to be executed at the next price determined. Limit orders on the other hand may be bid/ask orders which are to be executed at their specified limit or better. The Specialist's order book exchange system 280 of the present embodiment may treat market orders in the same way as limit orders by assigning a limit of 0 to sell market orders and an infinite limit to buy market orders. In other embodiments, an additional step of determining whether an incoming order is a market or limit order may be implemented and these two order types may be treated differently.

Concerning the validity of orders, the Specialist Auto-Ex market model may offer the following variations: good-for-day orders may only be valid for the current exchange trading day, good-till-date orders may only be valid until a specified date from the date of entry, whereby the date to be specified may be limited, e.g., to a maximum of 90 days including the current day. Another allowed validity constraint may be the good-till-cancelled constraint, indicating that a corresponding order may only be valid until it is either executed or deleted by the originator or the Specialist's order book exchange system 280 on reaching a maximum validity of e.g., 90 days, including the current day.

All order sizes may be accepted by the Specialist's order book exchange system 280. For all Specialist Auto-Ex instruments, round lot one may exist.

Order modifications may lead to a new time priority if either the limit is changed or the order modification has an adverse impact on the priority of the execution of other orders in the Specialist's order book 285 (e.g., increase of the volume of the order). However, if the volume of an existing order should be decreased, the currently valid time priority may be maintained.

If step 310 yields that the new order is a stop order, the system may determine in step 315 whether the reference price matches the stop price of the new order. This may correspond to determining whether the reference price is higher than or equal to the stop price if the stop order is a stop buy order and to a determination whether the reference price is lower than or equal to the stop price if the new order is a stop sell order, as mentioned above. The transaction price on the central order book 270 as well as the Specialist Auto-Ex price may be used for this determination.

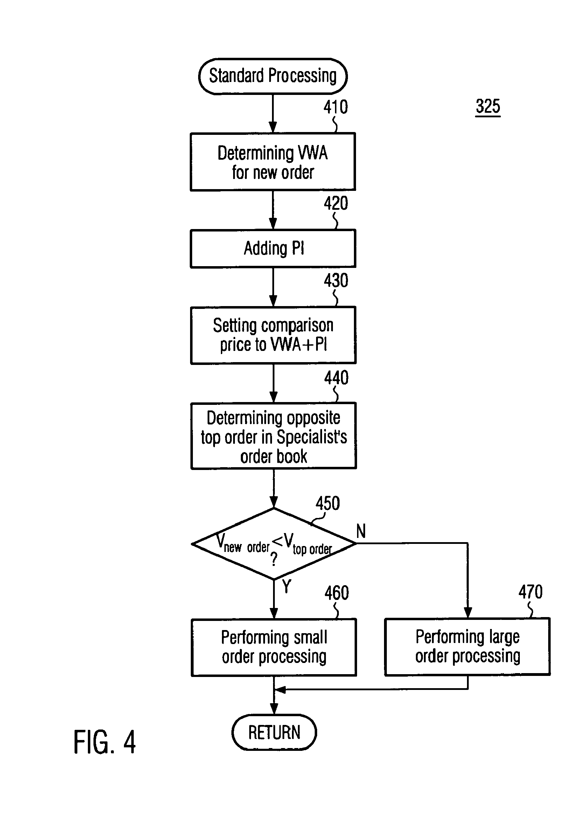

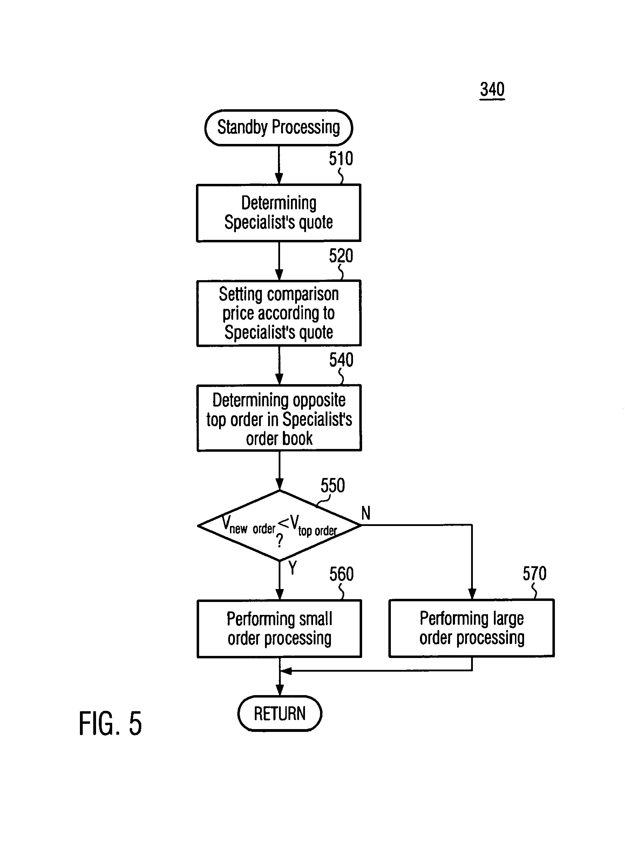

If the reference price does not match the stop price, the new order may be stored in step 335 in the Specialist's stop order book. If, however, the reference price matches the stop price, the system may proceed to step 320 for determining whether the reference market is available, i.e., whether the prevailing trading phase on the central order book exchange system 240 is not evening trading. Further details regarding the trading phases will be given below, with regard to Figure 19. If it has been determined in step 310 that the new order is not a stop order, the system may proceed directly to step 320, thereby skipping the price comparison in step 315. In case the reference market is available, the standard processing, which will be described in more detail with reference to Figure 4, may be performed in step 325. Otherwise, the Specialist's order book exchange system 280 may perform the standby processing in step 340 discussed below in connection with Figure 5.

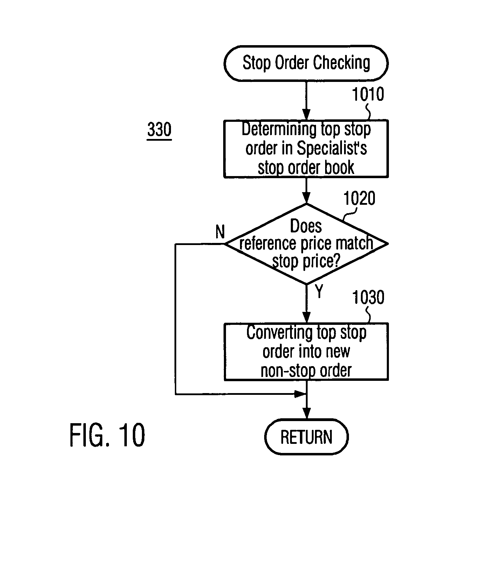

Following the step 335 of storing the new order in the Specialist's stop order book, the standby processing 340, the standard processing 325 or the change-induced processing 350, respectively, a stop order check may be performed in step 330. More details on the stop order check according to the present embodiment will be given below with respect to Figure 10. Thereafter, the system may return to step 305.

Turning now to Figure 4, the steps of the standard processing step 325 of Figure 3 according to the present embodiment are illustrated.

Beginning at step 410, the VWA price for the new order may be determined. This may correspond to determining the hypothetical volume-weighted average price for the case in which a new order would be fully executed against the opposite side of the central order book 270. The calculated VWA price may be rounded with respect to the decimal places the Specialist's order book exchange system 280 is trading at. Then, in step 420, the Specialist's price improvement (PI) may be added, thereby obtaining the "VWA+PI". The amount of Price Improvement may be pre-defined by the Specialist. If the new order is a sell order the price improvement may be positive (e.g., € +0.01) and otherwise negative (e.g., € -0.01). In both cases, PI may also equal zero. Subsequently, in step 430, a comparison price to be used in later processing steps may be set to the VWA+PI price.

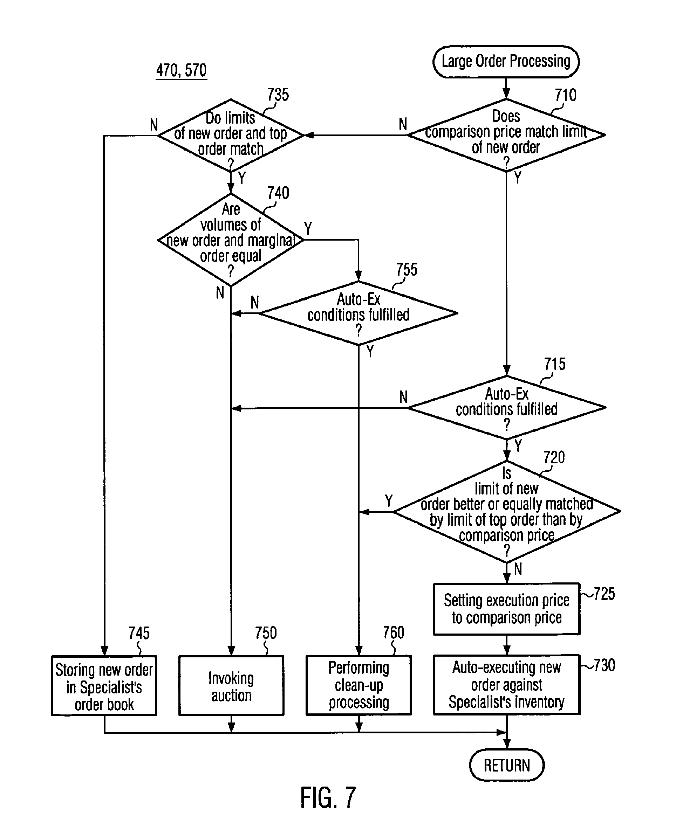

In step 440, the opposite top order in the Specialist's order book 285 may be determined. This may correspond to determining the sell order having the highest price/time priority in the Specialist's order book 285 if the new order is a buy order and the highest price/time prioritized buy order in the Specialist's order book 285 if the new order is a sell order. Then it may be determined in step 450 whether the volume (V) of the new order is less than the volume of the top order determined in step 440. If the opposite side of the Specialist's order book 285 is empty, the volume of the top order may be assumed to be 0 for the query in step 450. In the following, small order processing may be performed in step 460 if the determination in step 450 yields that the volume of the new order is less than the volume of the top order. Otherwise, large order processing may be performed in step 470. The small and large order processing will be described below with regard to Figures 6 and 7, respectively. Thereafter, the processing scheme may return to step 330 of Figure 3 for performing the stop order check.

Figure 5 depicts the standby processing step 340 of Figure 3 according to the present embodiment in more detail.

As mentioned above, the Specialist may enter quotes into the Specialist's order book exchange system 280 during evening trading hours, i.e., when the reference market provided by the central order book 270 is not available. The Specialist may provide firm quotes. The quote size may equal the guarantee size during automatic execution phases in evening trading. Incoming orders may then be matched against the Specialist's quotes as indicated in Figure 5.

In step 510, the Specialist's order book exchange system 280 may determine the Specialist's quote for the new order. Then it may set the comparison price, which may be used for price comparisons in later processing steps, according to the Specialist's quote. In step 540, the opposite top order in the Specialist's order book 285 may be determined. This may be accomplished in the same way as the determination in step 440 of Figure 4. Subsequently, it may be queried whether the volume of the new order is less than the volume of the determined top order resulting from step 540 in step 550. If this is the case, small order processing may be preformed in step 560. Otherwise, large order processing may be performed in step 570. Thereby, steps 550, 560 and 570 may correspond to steps 450, 460 and 470, respectively, which were described above with respect to Figure 4. Finally the processing scheme may return to step 330 of Figure 3 to perform the stop order check.

Referring now to Figure 6, the small order processing performed in steps 460 and 560 of Figures 4 and 5, respectively, according to an embodiment is shown.

The depicted small order processing begins at step 610 with a determination whether the new order is fully executable at the comparison price, which may have been set in step 430 of Figure 4 to the VWA+PI price or in step 520 of Figure 5 according to the Specialist's quote. The new order may be fully executable at the comparison price if the limit of the new order is matched by the comparison price. Thereby, the limit of the new order may be considered as being matched by the comparison price if the comparison price reaches or exceeds the limit of a new sell order and if the comparison price is less than or equal to the limit of a new buy order.

If the new order is not fully executable at the comparison price, it may be determined in step 650 whether the limits of the new order and the top order determined in steps 440 and 540 of Figures 4 and 5, respectively, match each other. This may correspond to determining whether the limit of the new order is less than or equal to the limit of the top order if the new order is a sell order and determining whether the limit of the new order is higher than or equal to the limit of the top order if the new order is a buy order. If the limits of the new order and the top order do not match, the new order may be stored in the Specialist's order book 285 in step 670. If, however, the limits of the new order and the top order match, an auction may be invoked in step 660.

Generally, in the present embodiment of the Specialist Auto-Ex functionality, an auction may consist either of a Freeze phase or a Call and a Freeze phase. During the Call phase, quotes may either be provided automatically or be entered by the Specialist as described above with respect to Figure 2. During the Call phase, orders may be entered, deleted, and modified by the market participants as well as the Specialist. The Specialist may end the Call phase by invoking the Freeze phase. The Specialist's order book 285 may be locked during the Freeze phase. Orders (including stop orders) that are entered, modified or deleted may be queued into the locked stock (except for Specialist's orders).

Price determination in auctions may be effected according to the above discussed Modified Principle of Most Executable Volume (MPoMEV) with price/time priority. To set a price during the determination phase, the Specialist may either confirm the price suggested by the system (the indicative auction price according to the MPoMEV or - after an auction on the central order book 270 - the central order book auction price). Alternatively, the Specialist may enter a price and a share volume at which orders - that are executable with regard to price and time priority - may be executed. The Specialist may take a surplus that exists at the given price.

The Specialist may enter Specialist's orders on behalf of Specialist Auto-Ex market participants. Under exceptional circumstances during the auction, the Specialist's orders, i.e., that are entered on own behalf may be exempted from price/time priority when a partial fill is due and the exemption from time/price priority is - in the customer's best interest - necessary to avoid partial fills. Specialist's orders entered on behalf of Specialist Auto-Ex market participants may always be subject to the time/price priority rules.

The Freeze phase may last a predefined maximum time, e.g., in the order of seconds. If the Specialist has not set a price within this time frame, the price determination may be invoked automatically and the price may be set without the Specialist's intervention according to the MPoMEV. If the surplus exceeds the guarantee size, the price determination may end automatically without setting a price, the order book may be defreezed, and the system may change into the Call phase subsequently.

Along with confirming or entering a price during price determination, the Specialist may enter addenda and symbols in connection with price determinations. The Specialist may end the Freeze phase without determining a price. In that case, the processing scheme may return to the normal Auto-Ex operation, e.g., by returning to step 330 or step 305 of Figure 3. Should that not be possible, e.g., due to Auto-Ex suspense conditions, discussed below in connection with step 620, or in case the Specialist leaves the Freeze at his discretion - the Call phase may be invoked.

After a price determination, the Specialist's quote may be deleted and the Specialist may enter a new quote. The quote may however not be deleted if the Freeze phase is ended without determining a price.

After the end of each Freeze phase, the Specialist's order book exchange system 280 may incorporate the order entries, changes and deletions that may have been queued in the locked stock. These entries and modifications may be incorporated on a subsequential basis in the order of their arrival. The system may then change into the normal Auto-Ex processing, e.g., at step 330 or 305 of Figure 3. If certain conditions are fulfilled during the subsequent processing of the locked stock, a Call phase may be invoked.

Returning now to Figure 6, the small order processing scheme may proceed to step 620 if the determining step 610 yields that the new order is fully executable at the comparison price.

In step 620, it may be determined whether the Auto-Ex conditions are fulfilled. According to the present embodiment, this may not be the case if the size of the new order exceeds the guarantee size. Also, if an auction takes place in the central order book exchange system 240, if the Specialist invokes an auction at his discretion or if a volatility interruption takes place in the Specialist's order book exchange system 280, the Auto-Ex conditions may not be fulfilled. Furthermore, the Specialist may define ex-ante, e.g. before the beginning of the trading day or during the trading day but before the arrival of the respective new order, a certain rule set so that the Auto-Ex conditions may not be fulfilled in case the new order fulfils the conditions of the ex-ante defined rule set.

Step 620 may further comprise a determination of whether the limits of the new order and the top order match which may correspond to the above-described determination in step 650.

If step 620 yields that the Auto-Ex conditions are not fulfilled, an auction may be invoked in step 660. More particularly, the Freeze phase of an auction may be invoked if step 660 has been entered because the limits of the new order and the top order match or because the size of the new order exceeds the guarantee size. In the latter case, the orders may be executed against each other (i.e., the Specialist may not act as counter-party) and the remaining part of the partially filled larger order may be re-entered into the Specialist's order book 285. If the size is below the guarantee size, the Specialist may always act as counterpart. In any other case leading to an auction in step 660, the Call phase may be invoked.

If it has been determined in step 620 that the Auto-Ex conditions are fulfilled, the execution price may be set to the comparison price in step 630 and the new order may be automatically executed against the Specialist's inventory at the execution price in step 640. Finally, after step 640, 660 or 670, the processing scheme may return to Figure 3 for proceeding to the stop order checking step 330.

Figure 7 is a flow chart illustrating the steps of the large order processing performed in steps 470 and 570 of Figures 4 and 5, respectively, according to an embodiment.

It may be determined in step 710 whether the comparison price matches the limit of the new order. This may correspond to determining whether the comparison price reaches or exceeds the limit of the new order if the new order is a sell order and determining whether the comparison price is less than or equal to the limit of the new order if the new order is a buy order.

If this is the case, it may be queried in step 715 whether the Auto-Ex conditions are fulfilled. Similarly to step 620 of Figure 6, this may comprise determining whether the size of the new order exceeds the guarantee size, whether an auction is taking place on the central order book exchange system 240, whether the Specialist has invoked an auction at his discretion, whether a volatility interruption occurs in the Specialist's order book exchange system 280 and whether the new order fulfils the conditions of an ex-ante defined rule set. If the Auto-Ex conditions are not fulfilled, an auction may be invoked in step 750, following the same principles discussed above with respect to step 650 of Figure 6.

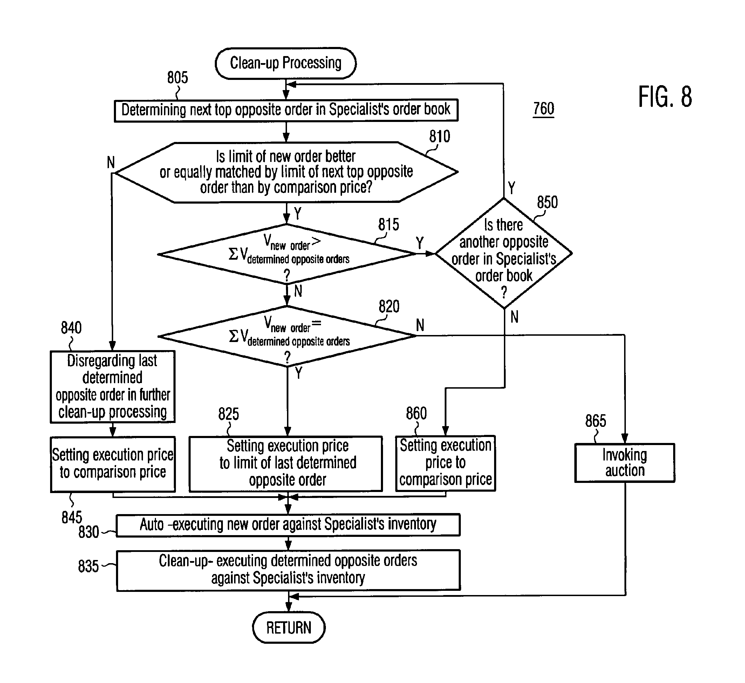

If however, the Auto-Ex conditions are fulfilled, it may be queried in step 720 whether the limit of the new order is better or equally matched by the limit of the top order than by the comparison price. This may be the case if the limit of the top sell order is less than or equal to the comparison price (and the comparison price is less than or equal to the limit of the new order), if the new order is a buy order. Alternatively, this may be fulfilled if the limit of the top order is higher than or equal to the comparison price (and the comparison price is higher than or equal to the limit of the new order) for a new sell order. In case the limit of the new order is better or equally matched by the limit of the top order than by the comparison price, the large order processing scheme may proceed to the clean-up processing step 760, which will be described below, with respect to Figure 8.

If it is determined in step 720 that the limit of the new order is not better or equally matched by the limit of the top order than by the comparison price, the execution price may be set to the comparison price in step 725 and the new order may be automatically executed against the Specialist's inventory at the execution price in step 730.

Returning now to step 710, the large order processing scheme may proceed to step 735 for determining whether the limits of the new order and the top order match if the comparison price does not match the limit of the new order. Specifically, it may be determined in step 735 whether the limit of the new order is less than or equal to the limit of the top order if the new order is a sell order and whether the limit of the new order reaches or exceeds the limit of the top order if the new order is a buy order. In case the limits of the new order and the top order do not match, the new order may be stored in the Specialist's order book 285 in step 745.

If the limit comparison in step 735 reveals that the limits of the new order and the top order do match, it may be determined in step 740 whether the volumes of the new order and the last to be executed order, referred to in the following as the marginal order, are equal. If this is the case, it may be determined in step 755 whether the Auto-Ex conditions are fulfilled. This may correspond to the determination step 620 discussed above with regard to Figure 6. If step 755 yields that the Auto-Ex conditions are fulfilled, the clean-up processing described below with respect to Figure 8 may be performed in step 760. Otherwise, an auction may be invoked in step 750. More particularly, step 750 may correspond to invoking the Freeze phase of an auction. Also in case step 740 reveals that the volumes of the new order and the marginal order are not equal, the auction invoking step 750 may be performed.

Finally, after step 730, 745, 750 or 760, the processing scheme may return to Figure 3 for performing the stop order check in step 330.

The clean-up processing step 760 will now be described in more detail with reference to Figure 8 which shows a corresponding flow chart according to an embodiment.

In step 805, the next top opposite order in the Specialist's order book 285 may be determined, i.e., the order on the opposite side of the Specialist's order book 285 having the next highest price/time priority. Then, in step 810, it may be determined whether the new order is better or equally matched by the limit of the next top opposite order then by the comparison price. This may comprise the same queries as step 720, explained above with respect to Figure 7.

If this is the case, it may be determined in step 815 whether the volume of the new order is larger than the sum of the volumes of all the previously determined (next) top opposite orders. If not, it may be detected in step 820 if the volume of the new order equals the sum of the volumes of the previously determined (next) opposite orders. If so, the execution price may be set to the limit of the last determined opposite order in step 825, and the new order may be automatically executed against the Specialist's inventory 290 in step 830. Additionally, all the previously determined opposite orders may be executed at the execution price set in step 825 against the Specialist's inventory 290 in the "clean-up" execution step 835. If it was detected in step 820 that the volume of the new order does not equal the sum of the volumes of the previously determined (next) opposite orders, an auction may be invoked in step 865.

In case it has been determined in step 815 that the volume of the new order is larger than the sum of the volumes of the previously determined opposite orders, it may be queried in step 850 whether there is another opposite order in the Specialist's order book 285. If this is the case, the clean-up processing scheme may return to step 805. Otherwise, the execution price may be set to the comparison price in step 860 and subsequently, the new order as well as the determined opposite orders may be executed in steps 830 and 835, respectively.

However, if it has been found in step 810 that the limit of the new order is not better or equally matched by the limit of the next top opposite order than by the comparison price, it may be determined in step 840 that the last determined opposite order is to be disregarded in the following steps of the clean-up processing 760. Then, the execution price may be set to the comparison price in step 845 and the clean-up processing scheme may proceed to steps 830 and 835 for executing the new order and the determined opposite orders, respectively.

Finally, after step 835 or step 865, the processing scheme may return to step 330 of Figure 3.

Figure 9 shows the change induced processing performed in step 350 of Figure 3 according to an embodiment. In step 910, the opposite orders in the Specialist's order book 285 may be determined. Then in step 920, the VWA price for each of these orders may be determined and in step 930, the Specialist's Price improvement may be added which may be positive (e.g., € +0.01) if the opposite orders are sell orders and negative (e.g., € -0.01) if the opposite orders are buy orders.

In step 940, it may be queried whether any of the orders determined in step 910 is fully executable at the VWA+PI price. If so, an auction may be invoked in step 950 and the processing scheme may return to step 330 of Figure 3. If none of the orders is fully executable at the VWA+PI price, step 950 of invoking an auction may be skipped.

Turning now to Figure 10, an illustrative example for the stop order checking performed in step 330 of Figure 3 is shown. In step 1010, the top stop order, i.e., the stop order having the highest price/time priority in the Specialist's stop order book may be determined. Upon having determined the top stop order, it may be queried whether the reference price matches the stop price in step 1020. This may be accomplished in the same way as in step 315 described above with respect to Figure 3. Again, the transaction price on the central order book 270 as well as the Specialist Auto-Ex price may be used for the determination. If the stop price of the top stop order is matched by the reference price, the top stop order may be converted into a new conventional order in step 1030. Then, the order processing may restart at step 305 of Figure 3 for processing this new conventional order. If, however the reference price does not match the stop price, step 1030 may be bypassed and it may be determined in step 305 whether any other new order is received by the Specialist's order book exchange system 280.

It may be apparent to those of ordinary skill in the art that the sequence of steps shown in Figures 3 to 10 has been chosen for illustration purposes only and is not to be understood as limiting the invention. For instance, steps 440 and 540 could be performed before steps 410 and 510 in Figures 4 and 5, respectively, the order of the execution steps 830 and 835 in Figure 8 could be reversed, or the queries controlling the processing flow could be differently arranged.

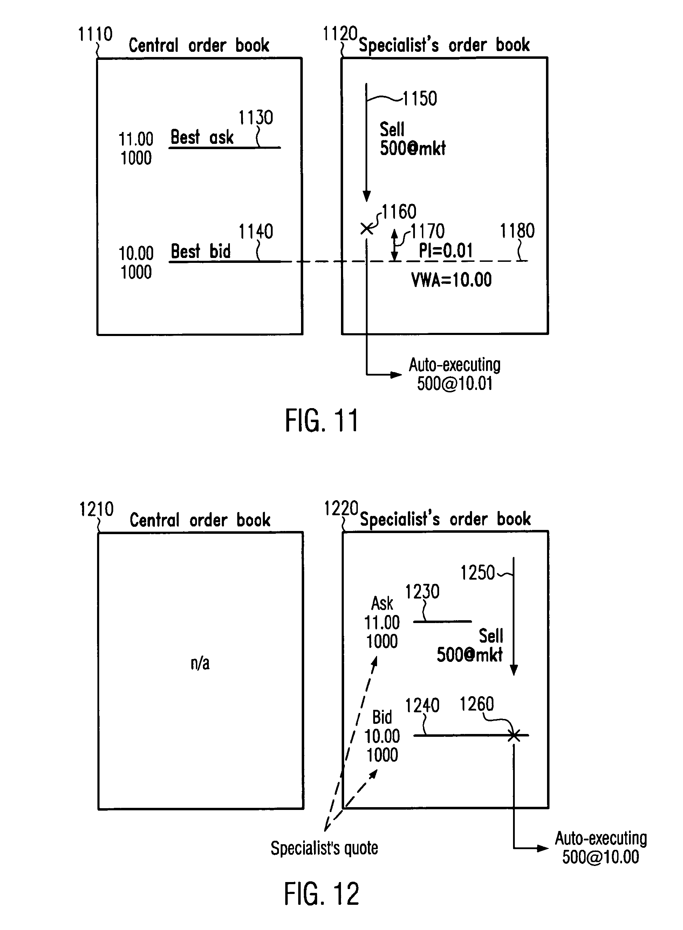

In the following, Figures 11 to 18 will be discussed which provide an overview over exemplary situations that may occur in the above described Specialist Auto-Ex facility. Thereby, the central order book 1110, 1210, 1310, 1410, 1510, 1610, 1710, 1810 and Specialist's order book 1120, 1220, 1320, 1420, 1520, 1620, 1720, 1820 of Figures 11 to 18 may correspond to the central order book 270 and the Specialist's order book 285, respectively, introduced above with regard to Figure 2.

Figure 11 depicts the basic Auto-Ex case of the present embodiment: an order 1150 may enter the Specialist Auto-Ex market via the Specialist's order book exchange system 280. For the size of the incoming order 1150 (500 shares), the VWA price 1180 from the central order book 1110 may immediately be determined: for the 500 shares of the incoming order 1150, the VWA price is € 10.00 in the depicted example. Upon this VWA price 1180, the Specialist's predefined price improvement 1170 of € 0.01 may be added. The system may determine that the incoming marketable order 1150 is fully executable at the VWA+PI price 1160 of € 10.01. Thus, the order 1150 may immediately be automatically executed against the Specialist's inventory 290 at € 10.01.

Figure 12 depicts an exemplary case during evening trading (or if trading on the central order book exchange system 240 is halted): as the central order book 1210 may not be available, the Specialist may provide a quote 1230, 1240. Incoming orders like the exemplary order 1250 may be executed against this quote. In the example of Figure 12, the incoming order 1250 is executed at an execution price 1260 of € 10.00. It is noted that price improvement may not apply in case the Specialist provides a quote.

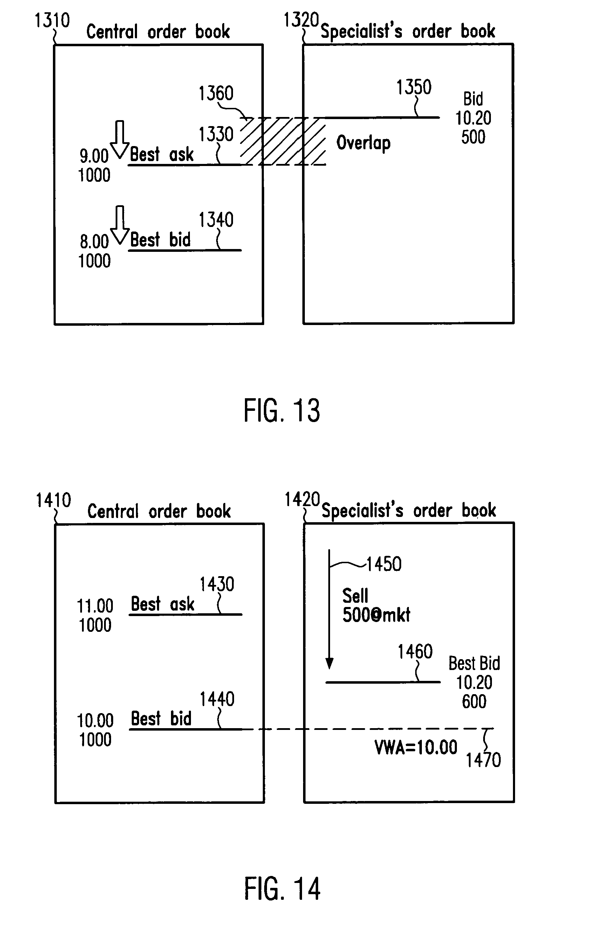

As discussed above, not immediately executable orders may be stored in the Specialist's order book 285. Customer orders from the Specialist's order book 285 may become executable if the situation on the reference market, i.e., in the central order book 270 changes or if a marketable order meets a limit order on the contra side of the Specialist's order book 285. Such exemplary situations are illustrated in Figures 13 and 14.

Referring to Figure 13, if the situation on the reference market, i.e., the central order book 1310 changes such that a limit order 1350 in the Specialist's order book 1320 becomes executable (with its full size) against the VWA+PI price for that order, the automatic execution may be suspended and a Call auction may be invoked. Thereby, the Specialist may provide human expertise and execute the order 1350 manually.

If the situation on the reference market 1310 changes but the limit order 1350 is still not executable (with its full size) against the VWA+PI price, the automatic execution functionality may not be suspended. In the example of Figure 13, this would be the case if the size of the limit order 1350 exceeded 1000 shares.

It is noted that a suspension of the automatic execution may also apply if the order 1350 was not the best bid order in the Specialist's order book 1320. In other words, if another limit order, e.g., "bid 2000@10.30" existed, the automatic execution may have been suspended as the order 1350 would become executable against the reference market 1310. In this case, the Specialist may provide human expertise and execute the order(s) in an auction upon his discretion.

Another example for an Auto-Ex suspension is illustrated in Figure 14. If a marketable order 1450 arrives such that its limit crosses the limit of a contra side order 1460 stored in the Specialist's order book 1420, the automatic execution may be suspended and a Call auction may be invoked. The Specialist may thereby provide human expertise and execute the order upon his discretion whereas he may be bounded by the rules and regs of the market. The Specialist may execute either the order 1450 or the contra side order 1460, thereby complying with the priority principles.

Although the suspensions of the automatic execution by the invoking of Call auctions may be important under certain circumstances, the resulting manual intervention may decrease the system's overall process efficiency. Therefore, Auto-Ex suspensions may be reduced to a minimum. This may be ensured by the introduction of an additional algorithm that may check whether orders can be automatically matched even if the stated Auto-Ex suspension conditions apply. This may be the case with the clean-up prints 835 discussed above with respect to Figure 8.

Clean-up prints may occur if a marketable sell (buy) arrives such that it is executable (with its full size) either against the VWA+PI price or a buy (sell) order stored in the Specialist's order book 285, and if the execution price is equal to or lower (higher) than the limit of a buy (sell) order stored in the Specialist's order book 285, and if the size of the - last to be executed - buy (sell) is equal to or lower than the (remaining) size of the incoming marketable order.

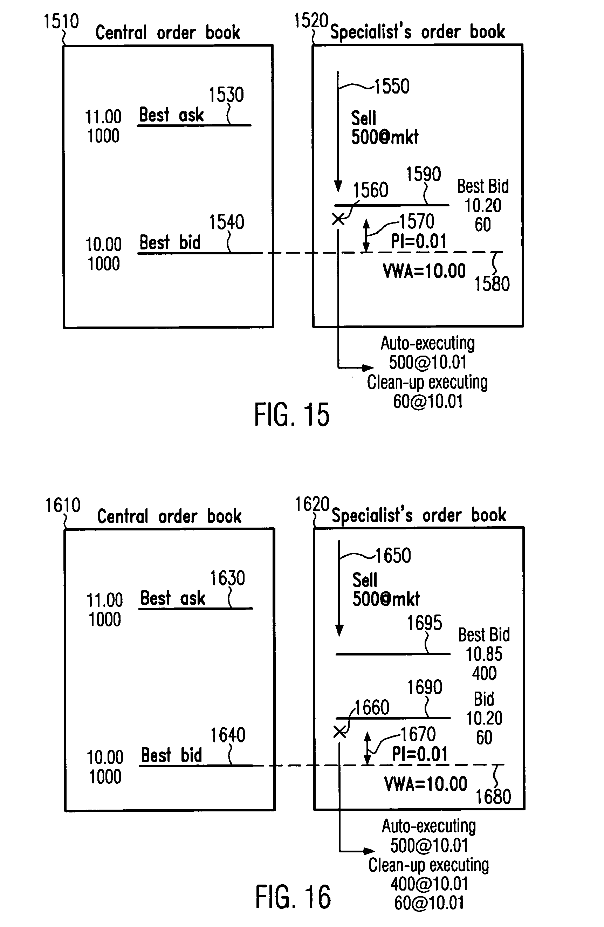

The basic case for a clean-up print 835 of the present embodiment is outlined in Figure 15. The incoming marketable sell order 1550 may be fully executable at the VWA+PI price 1560 of € 10.01. Since in the illustrated example, there is one buy order 1590 limited better than the VWA+PI price 1560 of € 10.01 and its size is lower than the size of the incoming order 1550, automatic order execution may be maintained. The limit order 1590 may be cleaned-up. All orders may be executed at a single price: the VWA+PI price 1560. It is noted that thereby, the order 1590 receives a price improvement compared to its limit.

In Figure 16, it is illustrated that this principle may also apply if several contra side orders 1690, 1695 exist in the Specialist's order book 1620 with limits equal to or better than the execution price 1660. All orders 1650, 1690, 1695 may be executed at the VWA+PI price 1660. The size of the last to be executed buy order 1690 may not exceed the remaining size of the incoming sell order 1650. If this was the case, an auction may have to be triggered as described above with reference Figure 14.

Under certain conditions, the clean-up price may not equal the VWA+PI price. This may be the case if the size of the - last to be executed, i.e., marginal - limit order equals the remaining size of the incoming order. All orders may be executed at a single price: the limit of the marginal limit order.

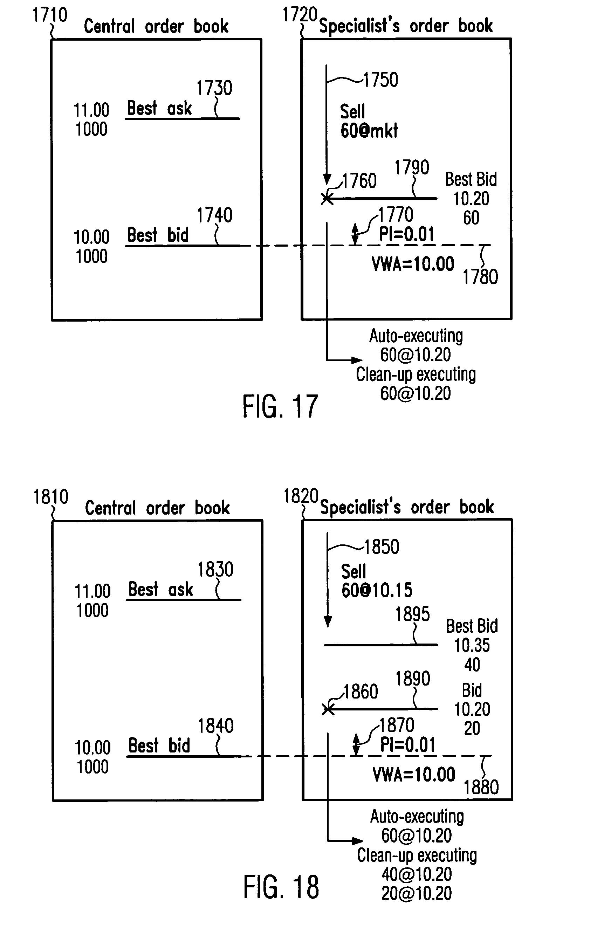

The basic principle applying to such situations according to the present embodiment is outlined in the example of Figure 17: an incoming sell order 1750 is shown that may be executable against the VWA+PI price. The size of the incoming order 1750 equals the size of the buy order 1790 that is limited better than the VWA+PI price, the VWA price 1780 being € 10.00 and the price improvement 1770 being € 0.01. Therefore, both orders 1750, 1790 may be executed against the Specialist's inventory 290 at the limit 1760 of the buy order 1790 of € 10.20.

An extension of the basic principle is shown in the example of Figure 18: an incoming order 1850 may meet several limit orders 1890, 1895 on the contra side of the Specialist's order book 1820. Since the remaining size of the incoming order 1850 (20 shares after virtually sweeping the order for the 40 shares of the best bid order 1895 at € 10.35) equals the size of the marginal limit order 1890 of 20 shares at a limit of € 10.20, all three orders 1850, 1890, 1895 may be automatically executed at the limit 1860 of the marginal limit order 1890, i.e. at € 10.20. It is noted that the limit of the incoming order 1850 (€ 10.15) does not meet the VWA+PI price (the VWA 1880 and PI 1870 being € 10.00 and € 0.01 respectively) but the order is still automatically executed in the present example.

Turning now back to step 320 of Figure 3, where it is determined whether the reference market is currently available, this may include determining the current trading phase in the central order book exchange system 240. A possible trading day on the central order book exchange system 240 and corresponding trading phases in the Specialist's order book exchange system 280 of the present embodiment are shown in Figure 19.

Between the pre-trading phase and the post-trading phase, there may be a number of trading phases 1905 on the central order book exchange system 240 such as auctions 1920, 1930, 1935, 1940 and continuous trading phases 1925 during the central order book trading hours 1910. A continuous trading phase may be a trading phase with ongoing price determination where each incoming order received at the central order book exchange system 240 may be instantly checked to determine whether it can be matched. During continuous trading the central order book 270 is always open. Continuous trading phase 1925 might be interrupted by auctions 1930 or by trading safeguards, i.e., volatility or market order interruptions which may result in an auction Call phase.

During continuous trading 1925 on the central order book exchange system 240, the Specialist's Auto-Ex processing may be such that it includes the standard processing step 325. Under certain conditions, the step may comprise an auction 1945 on the Specialist's order book exchange system 280, e.g., if it is determined in step 620 or 715 that the Auto-Ex conditions are not fulfilled (as mentioned above, this may be the case if an auction 1930 takes place on the central order book exchange system 240). Accordingly, auctions 1945 may take place on the Specialist's order book exchange system 280 during the opening, intra-day, closing and end of day auctions 1920, 1935 and 1940, respectively, on the central order book exchange system 240.

When auctions 1945 are triggered on the Specialist's order book exchange system 280, the Specialist may be obliged to provide firm quotes. When an auction is triggered during a continuous trading phase 1925 on the central order book exchange system 240, the VWA price for the guarantee size may be automatically set to equal the Specialist's quote. Subsequently, the quote may move along with the change in the situation on the central order book 270. The Specialist may change the quote at his discretion. Such a change may overwrite the automatically set quote. Once modified by the Specialist, the quote may not be automatically changed during that Call phase. Upon the start of a Freeze phase, the quote may be fixed. When an auction is triggered during auction phases 1920, 1930, 1935, 1940 on the central order book exchange system 240, the Specialist may provide a quote. When setting/adjusting the quote, the Specialist may consider the indicative auction price of the central order book exchange system 240 as well as his own order book situation.

During evening trading 1915, the central order book 270 may not be available. During this time, the Specialist Auto-Ex processing may lead to the standby processing step 340. As discussed above, also in this case, auctions (not shown) may be invoked on the Specialist's order book exchange system 280, e.g., in step 660, 750 or 865. Again, the Specialist may provide quotes during such auctions.

As apparent from the above description of embodiments, a trading system has been described with the focus to support retail trading in high liquid equities. The Specialist Auto-Ex facility comprising the Specialist's order book exchange system 280 and the Specialist's control terminal 275 may supplement the central order book exchange system 240.

The discussed Specialist Auto-Ex facility may primarily be designed to address the requirements of retail investors while offering a superior trading system that may ensure high price quality, lower trading costs and immediate execution. Accordingly, the market model may be designed to reduce partial fills for both market and limit orders, in order to overcome one major obstacle in retail trading. The Specialist Auto-Ex technique may implement a market model with one Specialist who interacts with a limit order book 285 that pools orders from (retail) investors.

In one exemplary embodiment, a computer system operated in a specialist's security trading system and corresponding methods and computer program products are provided. The specialist's security trading system provides a specialist's market apart from a reference market provided by a reference security trading system. The computer system comprises a specialist's order book adapted to store a first order. Further, the computer system comprises a receiving unit, a reference market observation unit, an execution price setting unit, and an order processing unit. The receiving unit is adapted to receive a second order, wherein the second order is a sell or buy order if the stored first order is a buy or sell order, respectively. The reference market observation unit is adapted to receive information indicating a current situation in a reference order book in the reference security trading system. The execution price setting unit is adapted to setting an execution price for the received second order by calculating a volume-weighted average price for the size of the received second order based on the current situation in the reference order book and adding a pre-defined price improvement to the volume-weighted average price. The order processing unit is adapted to automatically execute both the stored first order and the received second order at the execution price only if all the above described Auto-Ex conditions are fulfilled.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A computer system operated in a specialist's security trading system (280) providing a specialist's market apart from a reference market provided by a reference security trading system (240), the computer system being adapted to process orders and comprising:
a receiving unit adapted to receive an order (1150, 1250, 1450, 1550, 1650, 1750, 1850);
a size checking unit adapted to determine (620, 715, 755) whether the size of said order exceeds a predetermined guarantee size; and
an order processing unit adapted to automatically execute (640, 730, 830) said order with its full size if, at least, the size of said order does not exceed said guarantee size, and to invoke (660, 750) an auction in said specialist's security trading system if the size of said order exceeds said guarantee size.

2. The computer system of claim 1, further comprising a specialist's inventory accounting storage (290) adapted to store information relating to an inventory of securities available for serving said order in the specialist's market, and wherein automatically executing said order comprises automatically executing said order against said inventory.

3. The computer system of claim 1 or 2, further comprising:
a reference market observation unit adapted to receive information indicating a current situation in a reference order book (270, 1110, 1210, 1310, 1410, 1510, 1610, 1710, 1810) in said reference security trading system; and
an execution price setting unit adapted to set (630, 725, 845, 860) an execution price for said order by calculating (410) a volume-weighted average price for the size of said order based on the current situation in the reference order book and adding (420) a price improvement to said volume-weighted average price; and
wherein automatically executing said order comprises automatically executing said order at the execution price set by said execution price setting unit.

4. The computer system of claim 1 or 2, further comprising:
a reference market observation unit adapted to determine (320) whether information indicating a current situation in a reference order book (270, 1110, 1210, 1310, 1410, 1510, 1610, 1710, 1810) in said reference security trading system is currently available; and
a specialist's control terminal (275) adapted to enter into said specialist's security trading system a quote specified by a specialist controlling said specialist's security trading system; and
wherein automatically executing said order comprises automatically executing said order against said quote if said information indicating the current situation in the reference order book is currently unavailable.

5. The computer system of one of claims 1 to 4, further comprising:
one or more precondition checking units adapted to determine (620, 715, 755) whether one or more preconditions are fulfilled; and
wherein said order processing unit is further adapted not to automatically execute said order if at least one of said one or more preconditions is not fulfilled; and
wherein said preconditions comprise a condition that there is currently no auction (1920, 1930-1940) taking place in said reference security trading system, a condition that a specialist controlling said specialist's security trading system is currently not invoking an auction in said specialist's security trading system, a condition that there is currently no volatility interruption occurring in said specialist's security trading system, and/or a condition that a reference order book (270, 1110, 1210, 1310, 1410, 1510, 1610, 1710, 1810) in said reference security trading system does not contain any order (1330) having a limit that matches the limit of an opposite order (1350) in a specialist's order book (285, 1120, 1220, 1320, 1420, 1520, 1620, 1720, 1820).

6. The computer system of claim 5, wherein said order processing unit is further adapted to invoke (660, 750) an auction (1945) in said specialist's security trading system if at least one of said one or more preconditions is not fulfilled.

7. The computer system of one of claims 1 to 6, wherein said order processing unit is further adapted to execute said order partially if an auction (1945) takes place in said security trading system and, thereafter, to enter the remaining part of said order into a specialist's order book (285, 1120, 1220, 1320, 1420, 1520, 1620, 1720, 1820) in said specialist's security trading system.

8. The computer system of one of claims 1 to 7, wherein said order processing unit is further adapted to process said order exclusively in said specialist's security trading system, and said order is never routed to said reference security trading system.

9. The computer system of one of claims 1 to 8, further comprising a specialist's order book (285, 1120, 1220, 1320, 1420, 1520, 1620, 1720, 1820) for storing orders (1350, 1460, 1590, 1690, 1695, 1790, 1890, 1895), wherein said specialist's order book is closed to any participant in the specialist's market except a specialist controlling said specialist's security trading system.

10. A method of operating a computer system in a specialist's security trading system (280) providing a specialist's market apart from a reference market provided by a reference security trading system (240), the method being adapted to process orders and comprising the steps of:
receiving an order (1150, 1250, 1450, 1550, 1650, 1750, 1850);
determining (620, 715, 755) whether the size of said order exceeds a predetermined guarantee size;
automatically executing (640, 730, 830) said order with its full size if, at least, the size of said order does not exceed said guarantee size; and
invoking (660, 750) an auction in said specialist's security trading system if the size of said order exceeds said guarantee size.

11. The method of claim 10, further comprising storing information relating to an inventory of securities available for serving said order in the specialist's market in a specialist's inventory accounting storage (290) in said specialist's security trading system; and
wherein automatically executing said order comprises automatically executing said order against said inventory.

12. The method of claim 10 or 11, further comprising:
receiving information indicating a current situation in a reference order book (270, 1110, 1210, 1310, 1410, 1510, 1610, 1710, 1810) in said reference security trading system; and
setting (630, 725, 845, 860) an execution price for said order by calculating (410) a volume-weighted average price for the size of said order based on the current situation in the reference order book and adding (420) a price improvement to said volume-weighted average price; and
wherein automatically executing said order comprises automatically executing said order at the set execution price.

13. The method of claim 10 or 11, further comprising:
determining (320) whether information indicating a current situation in a reference order book (270, 1110, 1210, 1310, 1410, 1510, 1610, 1710, 1810) in said reference security trading system is currently available; and
entering into said specialist's security trading system through a specialist's control terminal (275) a quote specified by a specialist controlling said specialist's security trading system; and
wherein automatically executing said order comprises automatically executing said order against said quote if said information indicating the current situation in the reference order book is currently unavailable.

14. The method of one of claims 10 to 13, further comprising:
determining (620, 715, 755) whether one or more preconditions are fulfilled; and
suspending the automatic execution of said order if at least one of said one or more preconditions is not fulfilled;
wherein said preconditions comprise a condition that there is currently no auction (1920, 1930-1940) taking place in said reference security trading system, a condition that a specialist controlling said specialist's security trading system is currently not invoking an auction in said specialist's security trading system, a condition that there is currently no volatility interruption occurring in said specialist's security trading system, and/or a condition that a reference order book (270, 1110, 1210, 1310, 1410, 1510, 1610, 1710, 1810) in said reference security trading system does not contain any order (1330) having a limit that matches the limit of an opposite order (1350) in a specialist's order book (285, 1120, 1220, 1320, 1420, 1520, 1620, 1720, 1820).

15. The method of claim 14, further comprising invoking (660, 750) an auction (1945) in said specialist's security trading system if at least one of said one or more preconditions is not fulfilled.

16. The method of one of claims 10 to 15, further comprising executing said order partially if an auction (1945) takes place in said security trading system; and
thereafter, entering the remaining part of said order into a specialist's order book (285, 1120, 1220, 1320, 1420, 1520, 1620, 1720, 1820) in said specialist's security trading system.

17. The method of one of claims 10 to 16, further comprising process said order exclusively in said specialist's security trading system, wherein said order is never routed to said reference security trading system.

18. The method of one of claims 10 to 17, further comprising storing orders (1350, 1460, 1590, 1690, 1695, 1790, 1890, 1895) in a specialist's order book (285, 1120, 1220, 1320, 1420, 1520, 1620, 1720, 1820) in said specialist's security trading system, wherein said order book is closed to any participant in the specialist's market except a specialist controlling said specialist's security trading system.

19. A computer program product for operating a computer system in a specialist's security trading system (280) providing a specialist's market apart from a reference market provided by a reference security trading system (240), the computer program product being adapted to process orders and comprising:
first computer program means for receiving an order (1150, 1250, 1450, 1550, 1650, 1750, 1850);
second computer program means for determining (620, 715, 755) whether the size of said order exceeds a predetermined guarantee size;
third computer program means for automatically executing (640, 730, 830) said order with its full size if, at least, the size of said order does not exceed said guarantee size; and
forth computer program means for invoking (660, 750) an auction in said specialist's security trading system if the size of said order exceeds said guarantee size.

20. The computer program product of claim 19, further comprising computer program means for performing the steps of the method of one of claims 11 to 18.

21. A computer system operated in a specialist's security trading system (280) providing a specialist's market apart from a reference market provided by a reference security trading system (240), the computer system being adapted to process orders and comprising:
a specialist's order book (285, 1120, 1220, 1320, 1420, 1520, 1620, 1720, 1820) adapted to store a first order (1350, 1460, 1590, 1690, 1695, 1790, 1890, 1895);
a receiving unit adapted to receive a second order (1150, 1250, 1450, 1550, 1650, 1750, 1850), wherein the second order is a sell or buy order if the stored first order is a buy or sell order, respectively;
a reference market observation unit adapted to receive information indicating a current situation in a reference order book (270, 1110, 1210, 1310, 1410, 1510, 1610, 1710, 1810) in said reference security trading system;
an execution price setting unit adapted to set (630, 725, 845, 860) an execution price for the received second order by calculating (410) a volume-weighted average price for the size of the received second order based on the current situation in the reference order book and adding (420) a price improvement to said volume-weighted average price; and
an order processing unit adapted to automatically execute (830, 835) both the stored first order and the received second order at said execution price if one or more preconditions (310-320, 450, 710-720, 735, 740, 755, 810, 815, 850) are fulfilled.

22. The computer system of claim 21, wherein said preconditions comprise one or more conditions (450, 740) relating to the size of the received second order relative to the size of the stored first order, one or more conditions (710, 720, 810) relating to the limit of the received second order relative to said execution prize, one or more conditions (735, 720, 810) relating to the limit of the received second order relative to the limit of the stored first order, and/or one or more conditions (720, 810) relating to the limit of the stored first order relative to said execution price.

23. The computer system of claim 21 or 22, wherein said preconditions comprise one or more suspension conditions including a condition (620, 715, 755) that there is currently no auction (1920, 1930-1940) taking place in said reference security trading system, a condition (620, 715, 755) that a specialist controlling said specialist's security trading system is currently not invoking an auction in said specialist's security trading system, a condition (620, 715, 755) that there is currently no volatility interruption occurring in said specialist's security trading system, and/or a condition (620, 715, 755) that the reference order book does not contain any order (1330) having a limit that matches the limit of any opposite order (1350) in the specialist's order book.

24. The computer system of claim 23, wherein said order processing unit is further adapted to invoke (660, 750) an auction (1945) in said specialist's security trading system if at least one of said one or more suspension conditions is not fulfilled.

25. The computer system of one of claims 21 to 24, wherein said order processing unit is further adapted to execute said received second order partially if an auction (1945) takes place in said security trading system and, thereafter, to enter the remaining part of said received second order into the specialist's order book.

26. The computer system of one of claims 21 to 25, wherein said order processing unit is further adapted to process said first and second orders exclusively in said specialist's security trading system, and said first and second orders are never routed to said reference security trading system.

27. The computer system of one of claims 21 to 26, wherein said specialist's order book is closed to any participant in the specialist's market except a specialist controlling said specialist's security trading system.

28. The computer system of one of claims 21 to 27, further comprising a specialist's inventory accounting storage (290) adapted to store information relating to an inventory of securities available for serving said first and second orders in the specialist's market, and wherein automatically executing said first and second orders comprises automatically executing said first and second orders against said inventory.

29. The computer system of one of claims 21 to 28, further comprising:
a reference market observation unit adapted to determine (320) whether said information indicating the current situation in the reference order book is currently available; and
a specialist's control terminal (275) adapted to enter into said specialist's security trading system a quote specified by a specialist controlling said specialist's security trading system; and
wherein said order processing unit is further adapted to automatically execute said received second order against said quote.

30. A method of operating a computer system in a specialist's security trading system (280) providing a specialist's market apart from a reference market provided by a reference security trading system (240), the method being adapted to process orders and comprising the steps of:
storing a first order (1350, 1460, 1590, 1690, 1695, 1790, 1890, 1895) in a specialist's order book (285, 1120, 1220, 1320, 1420, 1520, 1620, 1720, 1820) in said specialist's security trading system;
receiving a second order (1150, 1250, 1450, 1550, 1650, 1750, 1850), wherein the second order is a sell or buy order if the stored first order is a buy or sell order, respectively;
receiving information indicating a current situation in a reference order book (270, 1110, 1210, 1310, 1410, 1510, 1610, 1710, 1810) in said reference security trading system;
setting (630, 725, 845, 860) an execution price for the received second order by calculating (410) a volume-weighted average price for the size of the received second order based on the current situation in the reference order book and adding (420) a price improvement to said volume-weighted average price; and
automatically executing (830, 835) both the stored first order and the received second order at said execution price if one or more preconditions (310-320, 450, 710-720, 735, 740, 755, 810, 815, 850) are fulfilled.

31. The method of claim 30, wherein said preconditions comprise one or more conditions (450, 740) relating to the size of the received second order relative to the size of the stored first order, one or more conditions (710, 720, 810) relating to the limit of the received second order relative to said execution prize, one or more conditions (735, 720, 810) relating to the limit of the received second order relative to the limit of the stored first order, and/or one or more conditions (720, 810) relating to the limit of the stored first order relative to said execution price.

32. The method of claim 30 or 31, wherein said preconditions comprise one or more suspension conditions including a condition (620, 715, 755) that there is currently no auction (1920, 1930-1940) taking place in said reference security trading system, a condition (620, 715, 755) that a specialist controlling said specialist's security trading system is currently not invoking an auction in said specialist's security trading system, a condition (620, 715, 755) that there is currently no volatility interruption occurring in said specialist's security trading system, and/or a condition (620, 715, 755) that the reference order book does not contain any order (1330) having a limit that matches the limit of any opposite order (1350) in the specialist's order book.

33. The method of claim 32, further comprising invoking (660, 750) an auction (1945) in said specialist's security trading system if at least one of said one or more suspension conditions is not fulfilled.

34. The method of one of claims 30 to 33, further comprising executing said received second order partially if an auction (1945) takes place in said security trading system; and
thereafter, entering the remaining part of said received second order into the specialist's order book.

35. The method of one of claims 30 to 34, further comprising processing said first and second orders exclusively in said specialist's security trading system, and wherein said first and second orders are never routed to said reference security trading system.

36. The method of one of claims 30 to 35, wherein said specialist's order book is closed to any participant in the specialist's market except a specialist controlling said specialist's security trading system.

37. The method of one of claims 30 to 36, further comprising storing information relating to an inventory of securities available for serving said first and second orders in the specialist's market in a specialist's inventory accounting storage (290) in said specialist's security trading system; and
wherein automatically executing said first and second orders comprises automatically executing said first and second orders against said inventory.

38. The method of one of claims 30 to 37, further comprising:
determining (320) whether said information indicating the current situation in the reference order book is currently available; and
entering into said specialist's security trading system through a specialist's control terminal (275) a quote specified by a specialist controlling said specialist's security trading system; and
wherein said order processing unit is further adapted to automatically execute said received second order against said quote.

39. A computer program product for operating a computer system in a specialist's security trading system (280) providing a specialist's market apart from a reference market provided by a reference security trading system (240), the computer program product being adapted to process orders and comprising:
first computer program means for storing a first order (1350, 1460, 1590, 1690, 1695, 1790, 1890, 1895) in a specialist's order book (285, 1120, 1220, 1320, 1420, 1520, 1620, 1720, 1820) in said specialist's security trading system;
second computer program means for receiving a second order (1150, 1250, 1450, 1550, 1650, 1750, 1850), wherein the second order is a sell or buy order if the stored first order is a buy or sell order, respectively;
third computer program means for receiving information indicating a current situation in a reference order book (270, 1110, 1210, 1310, 1410, 1510, 1610, 1710, 1810) in said reference security trading system;
forth computer program means for setting (630, 725, 845, 860) an execution price for the received second order by calculating (410) a volume-weighted average price for the size of the received second order based on the current situation in the reference order book and adding (420) a price improvement to said volume-weighted average price; and
fifth computer program means for automatically executing (830, 835) both the stored first order and the received second order at said execution price if one or more preconditions (310-320, 450, 710-720, 735, 740, 755, 810, 815, 850) are fulfilled.

40. The computer program product of claim 39, further comprising computer program means for performing the steps of the method of one of claims 30 to 38.
